# EUROPEAN PATENT SPECIFICATION

(11) **EP 3 067 810 B1**
(45) Date of publication and mention of the grant of the patent: **28.04.2021**
(21) Application number: 15852922.2
(22) Date of filing: 06.03.2015
(51) Int. Cl.: G06F 21/14, G06F 21/44, G06F 21/62, H04L 29/06

(54) **USER TERMINAL AND METHOD FOR PROTECTING CORE CODE OF APPLICATION PROGRAM USING SAME**
BENUTZERENDGERÄT UND VERFAHREN ZUM SCHUTZ EINES KERNCODES EINES ANWENDUNGSPROGRAMMS DAMIT
TERMINAL UTILISATEUR ET PROCÉDÉ POUR PROTÉGER UN CODE PRINCIPAL D'UN PROGRAMME D'APPLICATION L'UTILISANT

(30) Priority: 21.10.2014 KR 20140142293; 08.01.2015 KR 20150002937
(43) Date of publication of application: 14.09.2016
(73) Proprietor: Soongsil University Research Consortium Techno-Park, Seoul 156-743 (KR)
(72) Inventor: YI, Jeong Hyun, Gyeonggi-do 463-730 (KR); KIM, Sung Ryoung, Seoul 156-030 (KR)
(74) Representative: Roos, Peter
(86) International application number: PCT/KR2015/002202
(87) International publication number: WO 2016/064042

(56) References cited:
- WO-A1-2011/057393
- JP-A- 2008 527 905
- KR-A- 20120 002 079
- KR-A- 20140 089 321
- KR-B1- 101 223 981
- KR-B1- 101 328 012
- US-A1- 2007 005 974
- US-A1- 2013 145 477
- SANJAM GARG ET AL: "Candidate Indistinguishability Obfuscation and Functional Encryption for all circuits", INTERNATIONAL ASSOCIATION FOR CRYPTOLOGIC RESEARCH,, vol. 20130722:124513, 21 July 2013 (2013-07-21), pages 1-46, XP061007935, DOI: 10.1109/FOCS.2013.13 [retrieved on 2013-07-21]

## Description

### [Technical Field]

The present invention relates to a user terminal and a method of protecting a core code of an application using the same, and more particularly, to a user terminal capable of protecting a code core of an application against a reverse engineering attack and a method of protecting a core code of an application using the same.

### [Background Art]

Smartphone users can now take advantage of a variety of services by downloading and driving applications and contents which are developed and uploaded to a digital open market such as Google Play by other persons. Accordingly, a lot of data is accumulated in smartphones. Sensitive or critical information may be included in the accumulated data, and thus smartphone-related security techniques are being developed to protect such data.

Various data including financial and personal information stored in smart phones may be leaked out through counterfeit or forged applications as well as phishing, pharming, and smishing. Attackers extract source codes de-compiled by reverse-engineering applications, and then counterfeit or forge applications by inserting malicious codes or obtain an economic benefit by illegally using the forcibly extracted source codes.

Particularly, android applications can be relatively easily extracted and analyzed, unlike the iPhone application. As a result, the android applications become targets of copyright infringement of the applications and hacking attacks that insert malicious codes to counterfeit or forge the applications.

In order to prevent copyright infringement and false alteration of applications, a variety of source-obfuscation techniques and Google's LVL (Licensing Verification Library) has been suggested to increase a time required for analyzing the applications or make it difficult to reverse-engineer the application.

However, a technique is required for fundamentally protecting the applications and user information by using a technique for a method of preventing extraction or analysis of source codes of the applications instead of depending reverse engineering attacks by increasing difficulty of reverse engineering.

As a background technique of the present invention, Korean Patent No. 10-1328012 (2013.11.13) was disclosed.

### [DISCLOSURE]

### [Technical Problem]

The present invention relates to a user terminal and a method of protecting a core code of an application using the same, and more particularly, to a user terminal capable of protecting a code core of an application against a reverse engineering attack and a method of protecting a core code of an application using the same.

### [Technical Solution]

The present invention is defined by the appended independent claims. It has been made in an effort to provide a user terminal which protects a core code of an application program, including: a communication unit configured to receive a core code file of the application program from a peripheral which stores the core code file when the core code of the application program is authenticated; an encryption-decryption unit configured to encrypt the received core code file and transmit it to the peripheral, and to receive the encrypted core code file from the peripheral and decrypt it when the application program is executed; and an execution unit configured to execute the application program by using the decrypted core code file and a general code file of the application program installed in the user terminal.

The encryption-decryption unit may encrypt the core code file by using user terminal identification information and decrypts the encrypted core code file; and the user terminal identification information may include an international mobile equipment identity (IMEI), an ANDROID_ID, a serial number, a mobile phone number, a model number, and a MAC address.

The peripheral may receive the core code file from an application program providing server to store it and the application program providing server may separate a core code from an execution file of the application program to generate the core code file and transmits the generated core code file to the peripheral, and transmit the general code file obtained by separating the core code to the user terminal.

The core code file may be selected by a user or by using an object or a function pre-defined in a platform of the application program providing server.

The present invention has been made in an effort to provide a method of protecting a core code of an application program installed in a user terminal including, for the user terminal, receiving a core code file of the application program from a peripheral which stores the core code file when the core code of the application program is authenticated; encrypting the received core code file and transmitting it to the peripheral; receiving the encrypted core code file from the peripheral and decrypt it when the application program is executed; and executing the application program by using the decrypted core code file and a general code file of the application program installed in the user terminal.

### [Advantageous Effects]

Accordingly, according to the present invention, it is possible to protect a core code of an application program against a reverse engineering attack by respectively storing a general code file and a core code file of the application program in a user terminal and a peripheral capable of communicating with the user terminal.

Further, a core code encrypted by using user terminal identification information is stored in the peripheral. Accordingly, even when one of the user terminal and the peripheral is lost, a finder is not able to execute the application program, and thus it is possible to prevent wrongful use of the application program.

### [Description of the Drawings]

FIG. 1 is a schematic diagram illustrating a system of protecting a core code of an application program according to an exemplary embodiment of the present invention.
FIG. 2 is a block diagram illustrating a configuration of a user terminal according to an exemplary embodiment of the present invention.
FIG. 3 is a block diagram illustrating a configuration of a peripheral according to an exemplary embodiment of the present invention.
FIG. 4 is a flowchart illustrating a method of protecting a core code of an application program according to an exemplary embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

Hereinafter, exemplary embodiments of the present invention will be described in detail with reference to the accompanying drawings.

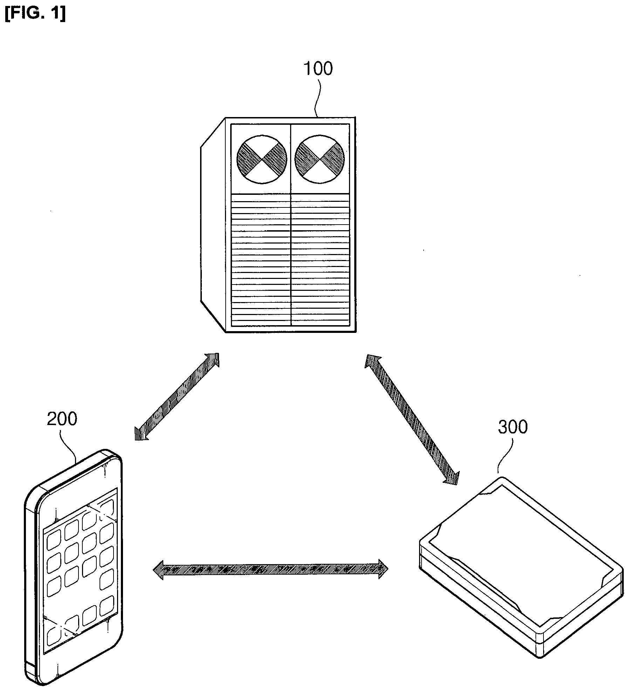

FIG. 1 is a schematic diagram illustrating a system of protecting a core code of an application program according to an exemplary embodiment of the present invention. As shown in FIG. 1, a core code protecting system according to the present exemplary embodiment includes an application program providing server 100, a user terminal 200, and a peripheral 300.

As shown in FIG. 1, the application program providing server 100, the user terminal 200, and the peripheral 300 are connected with each other through a network. Specifically, as shown in FIG. 1, the user terminal 200 is connected with the application program providing server 100 and the peripheral 300 through the network, and the peripheral 300 is connected with the application program providing server 100 through the network.

Herein, the network indicates a connection structure capable of facilitating information interchange between nodes such as user terminals and servers, and examples of the network include an Internet, a local area network (LAN), a wireless LAN, a wide area network (WAN), a personal area network (PAN), 3G, 4G, and Wi-Fi, but the present invention is not limited thereto.

Particularly, the user terminal 200 and the peripheral 300 may be wirelessly connected with each other by using Bluetooth, ZigBee, an infrared data association (IrDA) module, or the like, and may be connected with each other by wire.

First, the application program providing server 100 distributes an application program by transmitting a core code file and a general code file of the application program to each of the peripheral 300 and the user terminal 200.

In the present exemplary embodiment, the application program providing server 100 can be configured to store general code files and core code files of various kinds of application programs such as finances, news, shopping, and games, and to allow the user terminal 200 and the peripheral 300 to download these application programs therefrom to install them. Herein, the application program providing server 100 may be a mobile application market, such as Play in Google, App store in Apple, or a developer server.

The user terminal 200 receives a general code file of an application program from the application program providing server 100 to install it. Then, when receiving an input of initial execution of the application program or a request of core code authentication of the application program, the user terminal 200 encrypts the core code file received from the peripheral 300 and transmits the thus-encrypted core code file to the peripheral 300.

Herein, the user terminal 200 is a terminal in which an application program is to be installed and executed, such as a smartphone, a smart pad, a mobile phone, a laptop computer, a tablet PC, or PDA (Personal Digital Assistant). Particularly, in the case of the smartphone or the smart pad, the application program may be provided on a device as an application.

Herein, the application indicates an application program on a terminal, and includes an app which is executed in a mobile terminal (smartphone). A user may download an app from a mobile application market which is a virtual market in which mobile contents are freely sold and bought to install the app in the user terminal 200 such as a smartphone.

When an application program is re-executed, the user terminal 200 receives the encrypted core code file of the application program from the peripheral 300 to decrypt the received encrypted core code file, and executes the application program by using the decrypted core code file and a general code file thereof.

Finally, the peripheral 300 receives a core code of an application program from the application program providing server 100 to store the received core code, or stores a core code file of an application program by a developer of the application program.

The peripheral 300 transmits the stored core code file to the user terminal 200, and receives an encrypted core code file from the user terminal 200 to store the received encrypted core code. Further, when an application program installed in the user terminal 200 is executed, the peripheral 300 transmits an encrypted core code file of the application program to the user terminal 200.

Herein, the peripheral 300 is an electronic device that can communicate with the user terminal 200 and the application program providing server 100, and can receive and store a core code file of an application program. The peripheral 300 may be a wearable device including, e.g., a smart watch, smart glasses, a smart band, or a storage medium such as a communicable external hard disk, USB, or OTG.

Further, an appcessory such as an activity tracker, a mobile photo printer, a home monitoring device, a plaything, or a medical device may be employed as the peripheral 300. Herein, the appcessory indicates an accessory that is linked with an application of a smartphone serving as the user terminal 200 to expand functions of the smartphone.

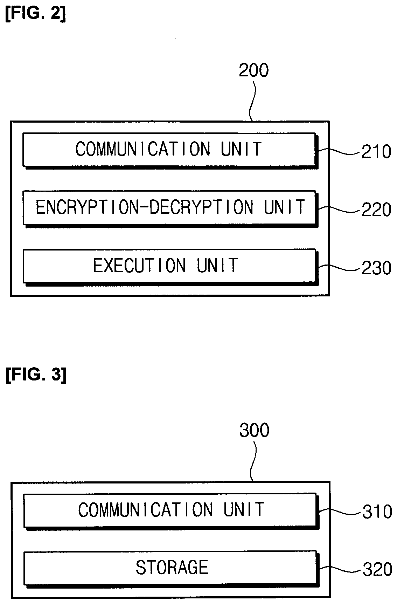

FIG. 2 is a block diagram illustrating a configuration of a user terminal according to an exemplary embodiment of the present invention.

As shown in FIG. 2, the user terminal 200 according to the present exemplary embodiment includes a communication unit 210, an encryption-decryption unit 220, and an execution unit 230.

First, the communication unit 210 communicates with the application program providing server 100 and the peripheral 300. Particularly, the communication unit 210 may communicate with the application program providing server 100 by using a wireless communications method including Wi-Fi, 3G, 4G, LTE, WiBro, or the like, and may communicate with the peripheral 300 through a short-range communication such as Bluetooth, ZigBee, and an infrared data association module, or by wire.

The communication unit 210 receives a general code file of an application program from the application program providing server 100 to install the application program in the user terminal 200.

Further, the communication unit 210 communicates with the peripheral 300 which stores a core code file of the application program.

When receiving an input of initial execution of an application program from a user or core code authentication of the application program, the communication unit 210 receives a core code file from the peripheral 300 which is paired therewith and transmits the core code file encrypted by the encryption-decryption unit 220 to the peripheral 300.

Further, when the application program is re-executed, the communication unit 210 sends a message of requesting the encrypted core code file to the peripheral 300 and receives the encrypted core code file from the peripheral 300

Then, the encryption-decryption unit 220 encrypts a core code file received from the peripheral 300. Further, when an application program is re-executed, the encryption-decryption unit 220 decrypts an encrypted core code file received from the peripheral 300 to obtain the core code file of the application program. In this case, the encryption-decryption unit 220 performs encryption or decryption by using user terminal identification information. Herein, the user terminal identification information includes an international mobile equipment identity (IMEI), an ANDROID_ID, a serial number, a mobile phone number, a model number, and a MAC address.

Finally, the execution unit 230 executes the application program by using a stored general code of the application program and a core code file obtained by decrypting an encrypted core code file thereof.

FIG. 3 is a block diagram illustrating a configuration of a peripheral according to an exemplary embodiment of the present invention.

As shown in FIG. 3, the peripheral 300 includes a communication unit 310 and a storage 320.

First, the communication unit 310 communicates with the application program providing server 100 and the user terminal 200. The communication unit 310 receives a core code file of an application program from the application program providing server 100 in an application program separating and transferring process.

When an application program installed in the user terminal 200 is initially executed or authentication of a core code of the application program is requested, the communication unit 310 transmits the core code file and receives an encrypted core code file from the user terminal 200.

Further, when the application program installed in the user terminal 200 is re-executed, the communication unit 310 receives a message of requesting the encrypted core code from the user terminal 200 and transmits the encrypted core code file to the user terminal 200.

Then, the storage 320 stores a core code file of an application program received from the application program providing server 100 or a developer and stores the encrypted core code file received from the user terminal 200.

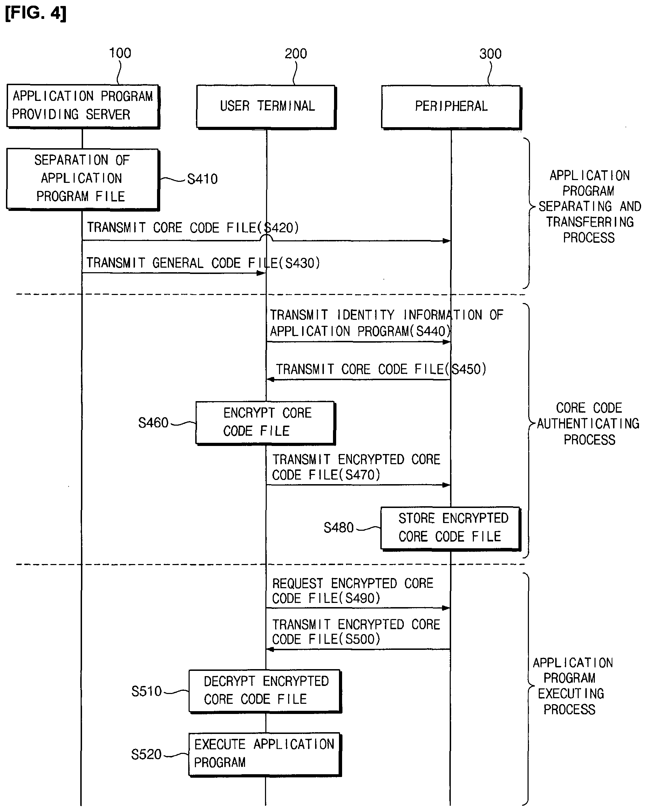

Hereinafter, a method of protecting a core code of an application program according to an exemplary embodiment of the present invention will be described with reference to FIG. 4.

FIG. 4 is a flowchart illustrating a method of protecting a core code of an application program according to an exemplary embodiment of the present invention.

As shown in FIG. 4, in the method of protecting a core code of an application program, steps S410 to S430 indicate the application program separating and transferring process, steps S440 to S470 indicate a core code authenticating process, and steps S480 to S510 indicate an application program executing process. For convenience of description, the method is roughly divided into three processes.

First, the application program providing server 100 performs the application program separating and transferring process through the steps S410 to S430.

Prior to the application program separating and transferring process, the application program providing server 100 performs separation of an application program file (S410). Specifically, the application program providing server 100 generates a core code file by setting a core code through an execution file decompiled from an application program package. Further, the application program providing server 100 generates a general code file including a general code by deleting a core code in the application program file.

The application program providing server 100 transmits the separated core code file to the peripheral 300 to store it (S420). In this case, the application program providing server 100 may transfer the core code file through the short-range communication or by wire in order to strength security when the core code file is transferred to the peripheral 300.

For convenience of description, it has been described that the application program providing server 100 performs separation of an application program file, and the peripheral 300 receives a core code file of an application program from the application program providing server 100 to store it, but the present invention is not limited thereto. Alternatively, a developer may directly store a core code of the application program in the peripheral 300 to distribute the core code file.

Further, when a user accesses the application program providing server 100 through the user terminal 200, the application program providing server 100 transmits a general code file to the user terminal 200 by using a download method (S430). The user terminal 200 may download a general code file of an application program that is desired to be installed by using a network such as 3G, 4G, or Wi-Fi.

Next, the user terminal 200 and the peripheral 300 perform core code authentication through the steps S440 to S480.

Prior to the core code authentication, the user terminal 200 performs a pairing connection with the peripheral 300. For convenience of description, it has been described that the pairing connection between the user terminal 200 and the peripheral 300 was performed in the core code authentication process, but the present invention is not limited thereto. The user terminal 200 and the peripheral 300 may be paired with each other even before the core code authentication process.

Next, the user terminal 200 transmits identity information of the application program to the peripheral 300 that is paired therewith (S440). The peripheral 300 can identify a target application program for core code authentication among a plurality of application programs stored in the peripheral 300, by using the received identity information of the application program.

Then, the peripheral 300 transmits a core code file of the application program corresponding to the identity information thereof to the user terminal 200 (S450). In this case, the peripheral 300 may use a wiring communication or a short-range wireless communication with the user terminal 200 to transmit the core code file.

The user terminal 200 encrypts the received core code file (S460). The user terminal 200 extracts user terminal identification information and encrypts the core code file by using the extracted information. Herein, the user terminal identification information includes an international mobile equipment identity (IMEI), an ANDROID_ID, a serial number, a mobile phone number, a model number, and a MAC address.

The IMEI indicates a unique identity number that is given to every mobile phone. When mobile phones are manufactured and shipped, mobile phone manufacturers give an IMEI to each of the mobile phones according to guidelines of Global system for mobile communications association. The IMEI has a total of 15 digits including an approval code of 8 digits, a model serial number of 6 digits, a verification code of 1 digits, and is managed to block calls of lost or stolen terminals.

In the present exemplary embodiment, a system of protecting a core code of an application program may employ user terminal identification information such as ANDROID_ID which is a unique 64-bit value generated and stored when the user terminal 200 is initially boosted, a serial number assigned when the user terminal 200 is manufactured, and a mobile phone number. Further, a MAC address of the user terminal 200 which uses WiFi and/or Bluetooth may be used as the user terminal identification information.

As a result, the user terminal 200 stores the core code file encrypted by using the user terminal identification information in the peripheral 300 and decrypts the encrypted core code file received from the peripheral 300 when an application program is executed, by using the user terminal identification information to execute the application program.

Then, the user terminal 200 transmits the encrypted core code file to the peripheral 300 (S470), and the peripheral 300 stores the received encrypted core code file (S480).

The core code file encrypted by using the user terminal identification information is dependent on the user terminal 200. Specifically, a user terminal 200 which encrypts a core code file of an application program is exclusively permitted to decrypt the encrypted core code file in order to execute the application program, and another user terminal is not able to decrypt the core code file even when acquiring the encrypted core code file stored in the peripheral 300.

Next, when an application program installed in the user terminal 200 is executed, the user terminal 200 and the peripheral 300 performs the application program executing process through the steps S490 to S520. Further, prior to step S490, the user terminal 200 may check whether there are a user terminal 200 and a peripheral 300 that stores a core code file of an application program.

The user terminal 200 transmits a message of requesting an encrypted core code to the peripheral 300 (S490). In this case, the message of requesting an encrypted core code may include identity information of a re-executed application program.

The peripheral 300 transmits the encrypted core code file of the application program stored in step S480 to the user terminal 200 (S500).

Next, the user terminal 200 extracts user terminal identification information and decrypts the received encrypted core code file by using user terminal identification information (S510).

Finally, the user terminal 200 combines the decrypted core code file and the general code file stored in the user terminal 200 to execute the corresponding application program (S520).

The general code file installed in the user terminal 200 may be a main routine, and the core code file may be a sub routine. When the user terminal 200 executes a general code file, the general code file calls a sub routine to execute the core code file decrypted in step S510. Accordingly, the user terminal 200 may execute the corresponding application program.

As such, according to the exemplary embodiment of the present invention, it is possible to protect a core code of an application program against a reverse engineering attack by respectively storing a general code file and a core code file of the application program in a user terminal and a peripheral capable of communicating with the user terminal.

Further, a core code encrypted by using user terminal identification information is stored in the peripheral. Accordingly, even when one of the user terminal and the peripheral is lost, a finder is not able to execute the application program, and thus it is possible to prevent wrongful use of the application program.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### <Description of symbols>

100 : application program providing server
200 : user terminal
210: communication unit
220 : encryption-decryption unit
230 : execution unit
300 : peripheral
310: communication unit
320 : storage

## Claims

1. A user terminal (200) which protects a core code of an application program, the user terminal (200) comprising:
a communication unit (210) configured to communicate with a peripheral (300) through a short-range wireless communication such as Bluetooth, ZigBee, an infrared data association module, or the like, or by wire, and to receive a core code file of the application program by using the short-range wireless communication or the wired communication from the peripheral (300) which stores the core code file when the core code of the application program is authenticated;
an encryption-decryption unit (220) configured to encrypt the received core code file and transmit it to the peripheral (300), and to receive the encrypted core code file from the peripheral (300) and decrypt it when the application program is executed; and
an execution unit (230) configured to execute the application program by using the decrypted core code file and a general code file of the application program installed in the user terminal (200).

2. The user terminal (200) of claim 1, wherein the encryption-decryption unit (220) encrypts the core code file by using user terminal identification information and decrypts the encrypted core code file; and
the user terminal identification information includes an international mobile equipment identity (IMEI), an ANDROID _ID, a serial number, a mobile phone number, a model number, and a MAC address.

3. The user terminal (200) of any one of claims 1 or 2, wherein the peripheral (300) receives the core code file from an application program providing server (100) to store it and
the application program providing server (100) separates a core code from an execution file of the application program to generate the core code file and transmits the generated core code file to the peripheral (300), and transmits the general code file obtained by separating the core code to the user terminal (200).

4. The user terminal (200) of any one of claims 1 to 3, wherein the core code file is selected by a user or by using an object or a function pre-defined in a platform of the application program providing server (100).

5. A method of protecting a core code of an application program installed in a user terminal (200), the method comprising:
for the user terminal (200),
communicating with a peripheral (300) through a short-range wireless communication such as Bluetooth, ZigBee, an infrared data association module, or the like, or by wire, and receiving a core code file of the application program by using the short-range wireless communication or the wired communication from the peripheral (300) which stores the core code file when the core code of the application program is authenticated;
encrypting the received core code file and transmitting it to the peripheral (300);
receiving the encrypted core code file from the peripheral (300) and decrypt it when the application program is executed; and
executing the application program by using the decrypted core code file and a general code file of the application program installed in the user terminal (200).

6. The method of claim 5, wherein the user terminal (200) encrypts the core code file by using user terminal identification information and decrypts the encrypted core code file; and
the user terminal identification information includes an international mobile equipment identity (IMEI), an ANDROID _ID, a serial number, a mobile phone number, a model number, and a MAC address.

7. The method of any one of claims 5 or 6, wherein the peripheral (300) receives the core code file from the application program providing server (100) to store it and the application program providing server (100) separates a core code from an execution file of the application program to generate the core code file and transmits the generated core code file to the peripheral (300), and transmits the general code file obtained by separating the core code to the user terminal (200).

8. The method of any one of claims 5 to 7, wherein the core code file is selected by a user or by using an object or a function pre-defined in a platform of the application program providing server (100).

9. A system (100, 200, 300) for protecting a core code of an application program, the system comprising a user terminal (200) according to any one of claims 1 to 4, the application program providing server (100), and the peripheral (300).

10. The system (100, 200, 300) of claim 9, wherein the application program providing server (100), the user terminal (200), and the peripheral (300) are connected with each other through a network.

11. The system (100, 200, 300) of claim 9 or 10, wherein the peripheral (300) is an electronic device configured to communicate with the user terminal (200) and the application program providing server (100) and to receive and store the core code file.

## Patentansprüche

1. Benutzerterminal (200), das einen Kerncode eines Anwendungsprogramms schützt, wobei das Benutzerterminal (200) umfasst:
eine Kommunikationseinheit (210), die so konfiguriert ist, dass sie mit einem Peripheriegerät (300) über eine drahtlose Kommunikation mit kurzer Reichweite, wie Bluetooth, ZigBee, ein Infrarot-Datenzuordnungsmodul oder dergleichen, oder über eine leitungsgebunden kommuniziert und eine Kerncodedatei des Anwendungsprogramms unter Verwendung der drahtlosen Kommunikation mit kurzer Reichweite oder der leitungsgebundenen Kommunikation von dem Peripheriegerät (300) empfängt, das die Kerncodedatei speichert, wenn der Kerncode des Anwendungsprogramms authentifiziert wird;
eine Verschlüsselungs-/Entschlüsselungseinheit (220), die so konfiguriert ist, dass sie die empfangene Kerncodedatei verschlüsselt und an das Peripheriegerät (300) überträgt und die verschlüsselte Kerncodedatei von dem Peripheriegerät (300) empfängt und sie entschlüsselt, wenn das Anwendungsprogramm ausgeführt wird; und
eine Ausführungseinheit (230), die so konfiguriert ist, dass sie das Anwendungsprogramm unter Verwendung der entschlüsselten Kerncodedatei und einer allgemeinen Codedatei des in dem Benutzerterminal (200) installierten Anwendungsprogramms ausführt.

2. Benutzerterminal (200) nach Anspruch 1, wobei die Verschlüsselungs-Entschlüsselungseinheit (220) die Kerncodedatei unter Verwendung von Benutzerterminal-Identifikationsinformation verschlüsselt und die verschlüsselte Kerncodedatei entschlüsselt; und
die Benutzerterminal-Identifikationsinformation eine internationale Mobilgeräte-Identifikation (IMEI), eine ANDROID_ID, eine Seriennummer, eine Mobiltelefonnummer, eine Modellnummer und eine MAC-Adresse umfasst.

3. Benutzerterminal (200) nach einem der Ansprüche 1 oder 2, wobei das Peripheriegerät (300) die Kerncodedatei von einem Anwendungsprogramm-Bereitstellungsserver (100) empfängt, um sie zu speichern, und
der Anwendungsprogramm-Bereitstellungsserver (100) einen Kerncode von einer Ausführungsdatei des Anwendungsprogramms abtrennt, um die Kerncodedatei zu erzeugen, und die erzeugte Kerncodedatei an das Peripheriegerät (300) überträgt, und die durch Abtrennen des Kerncodes erhaltene allgemeine Codedatei an das Benutzerterminal (200) überträgt.

4. Benutzerterminal (200) nach einem der Ansprüche 1 bis 3, wobei die Kerncodedatei von einem Benutzer oder unter Verwendung eines Objekts oder einer Funktion ausgewählt wird, die in einer Plattform des Anwendungsprogramm-Bereitstellungsservers (100) vordefiniert ist.

5. Verfahren zum Schützen eines Kerncodes eines Anwendungsprogramms, das in einem Benutzerterminal (200) installiert ist, wobei das Verfahren umfasst:
für das Benutzerterminal (200),
Kommunizieren mit einem Peripheriegerät (300) über eine drahtlose Kommunikation mit kurzer Reichweite, wie Bluetooth, ZigBee, ein Infrarot-Datenzuordnungsmodul oder
dergleichen, oder leitungsgebunden, und Empfangen einer Kerncodedatei des Anwendungsprogramms unter Verwendung der drahtlosen Kommunikation mit kurzer Reichweite oder der leitungsgebundenen Kommunikation von dem Peripheriegerät (300), das die Kerncodedatei speichert, wenn der Kerncode des Anwendungsprogramms authentifiziert wird;
Verschlüsseln der empfangenen Kerncodedatei und Übertragen derselben an das Peripheriegerät (300);
Empfangen der verschlüsselten Kerncodedatei von dem Peripheriegerät (300) und Entschlüsseln derselben, wenn das Anwendungsprogramm ausgeführt wird; und
Ausführen des Anwendungsprogramms unter Verwendung der entschlüsselten Kerncodedatei und einer allgemeinen Codedatei des in dem Benutzerterminal (200) installierten Anwendungsprogramms.

6. Verfahren nach Anspruch 5, wobei das Benutzerterminal (200) die Kerncodedatei unter Verwendung einer Benutzerterminal-Identifikationsinformation verschlüsselt und die verschlüsselte Kerncodedatei entschlüsselt; und
die Benutzerterminal-Identifikationsinformation eine internationale Mobilgeräte-Identifikation (IMEI), eine ANDROID_ID, eine Seriennummer, eine Mobiltelefonnummer,
eine Modellnummer und eine MAC-Adresse umfasst.

7. Verfahren nach einem der Ansprüche 5 oder 6, wobei das Peripheriegerät (300) die Kerncodedatei von dem Anwendungsprogramm-Bereitstellungsserver (100) empfängt, um sie zu speichern, und
der Anwendungsprogramm-Bereitstellungsserver (100) einen Kerncode von einer Ausführungsdatei des Anwendungsprogramms abtrennt, um die Kerncodedatei zu erzeugen, und die erzeugte Kerncodedatei an das Peripheriegerät (300) überträgt, und die durch Abtrennen des Kerncodes erhaltene allgemeine Codedatei an das Benutzerterminal (200) überträgt.

8. Verfahren nach einem der Ansprüche 5 bis 7, wobei die Kerncodedatei von einem Benutzer oder unter Verwendung eines Objekts oder einer Funktion ausgewählt wird, die in einer Plattform des Anwendungsprogramm-Bereitstellungsservers (100) vordefiniert ist.

9. System (100, 200, 300) zum Schützen eines Kerncodes eines Anwendungsprogramms, wobei das System ein Benutzerterminal (200) nach einem der Ansprüche 1 bis 4, den Anwendungsprogramm-Bereitstellungsserver (100) und das Peripheriegerät (300) umfasst.

10. System (100, 200, 300) nach Anspruch 9, wobei der Anwendungsprogramm-Bereitstellungsserver (100), das Benutzerterminal (200) und das Peripheriegerät (300) über ein Netzwerk miteinander verbunden sind.

11. System (100, 200, 300) nach Anspruch 9 oder 10, wobei das Peripheriegerät (300) ein elektronisches Gerät ist, das so konfiguriert ist, dass es mit dem Benutzerterminal (200) und dem Anwendungsprogramm-Bereitstellungsserver (100) kommuniziert und die Kerncodedatei empfängt und speichert.

## Revendications

1. Un terminal d'utilisateur (200) qui protège un code de base d'un programme d'application, le terminal d'utilisateur (200) comprenant :
une unité de communication (210) configurée pour communiquer avec un périphérique (300) par le biais d'une communication sans fil à courte portée telle que Bluetooth, ZigBee, un module d'association de données infrarouge, ou similaire, ou par fil, et pour recevoir un fichier de code de base du programme d'application en utilisant la communication sans fil à courte portée ou la communication câblée du périphérique (300) qui stocke le fichier de code de base lorsque le code de base du programme d'application est authentifié ;
une unité de cryptage-décryptage (220) configurée pour crypter le fichier de code de base reçu et le transmettre au périphérique (300), et pour recevoir le fichier de code de base crypté du périphérique (300) et le décrypter lorsque le programme d'application est exécuté ; et
une unité d'exécution (230) configurée pour exécuter le programme d'application en utilisant le fichier de code de base décrypté et un fichier de code général du programme d'application installé dans le terminal d'utilisateur (200).

2. Le terminal d'utilisateur (200) selon la revendication 1, dans lequel l'unité de cryptage-décryptage (220) crypte le fichier de code de base en utilisant les informations d'identification du terminal d'utilisateur et décrypte le fichier de code de base crypté ; et
les informations d'identification du terminal utilisateur comprennent une identité internationale d'équipement mobile (IMEI), un ANDROID_ID, un numéro de série, un numéro de téléphone mobile, un numéro de modèle et une adresse MAC.

3. Le terminal d'utilisateur (200) selon l'une des revendications 1 ou 2, dans lequel le périphérique (300) reçoit le fichier de code de base d'un serveur (100) fournissant le programme d'application pour le stocker et
le serveur (100) fournissant le programme d'application sépare un code de base d'un fichier d'exécution du programme d'application pour générer le fichier de code de base et transmet le fichier de code de base généré au périphérique (300), et transmet le fichier de code général obtenu en séparant le code de base au terminal d'utilisateur (200).

4. Le terminal d'utilisateur (200) selon l'une des revendications 1 à 3, dans lequel le fichier de code de base est sélectionné par un utilisateur ou en utilisant un objet ou une fonction prédéfinie dans une plate-forme du serveur (100) fournissant le programme d'application.

5. Une méthode de protection d'un code de base d'un programme d'application installé dans un terminal d'utilisateur (200), la méthode comprenant :
pour le terminal d'utilisateur (200),
communiquer avec un périphérique (300) par le biais d'une communication sans fil à courte portée telle que Bluetooth, ZigBee, un module d'association de données à infrarouge ou autre, ou par fil, et recevoir un fichier de code de base du programme d'application en utilisant la communication sans fil à courte portée ou la communication par fil du périphérique (300) qui stocke le fichier de code de base lorsque le code de base du programme d'application est authentifié ;
le cryptage du fichier de code de base reçu et sa transmission au périphérique (300) ;
la réception du fichier de code de base crypté du périphérique (300) et son décryptage lors de l'exécution du programme d'application ; et
l'exécution du programme d'application en utilisant le fichier de code de base décrypté et un fichier de code général du programme d'application installé dans le terminal d'utilisateur (200).

6. La méthode selon la revendication 5, dans laquelle le terminal d'utilisateur (200) crypte le fichier de code de base en utilisant les informations d'identification du terminal d'utilisateur et décrypte le fichier de code de base crypté ; et
les informations d'identification du terminal utilisateur comprennent une identité internationale d'équipement mobile (IMEI), un ANDROID ID, un numéro de série, un numéro de téléphone mobile, un numéro de modèle et une adresse MAC.

7. La méthode selon l'une des revendications 5 ou 6, dans laquelle le périphérique (300) reçoit le fichier de code de base du serveur (100) fournissant le programme d'application pour le stocker et
le serveur (100) fournissant le programme d'application sépare un code de base d'un fichier d'exécution du programme d'application pour générer le fichier de code de base et transmet le fichier de code de base généré au périphérique (300), et transmet le fichier de code général obtenu en séparant le code de base au terminal d'utilisateur (200).

8. La méthode selon l'une des revendications 5 à 7, dans laquelle le fichier de code de base est sélectionné par un utilisateur ou en utilisant un objet ou une fonction prédéfinie dans une plate-forme du serveur (100) fournissant le programme d'application.

9. Système (100, 200, 300) pour protéger un code de base d'un programme d'application, le système comprenant un terminal d'utilisateur (200) selon l'une des revendications 1 à 4, le serveur (100) fournissant le programme d'application et le périphérique (300).

10. Le système (100, 200, 300) selon la revendication 9, dans lequel le serveur (100) fournissant le programme d'application, le terminal d'utilisateur (200) et le périphérique (300) sont reliés entre eux par un réseau.

11. Le système (100, 200, 300) selon la revendication 9 ou 10, dans lequel le périphérique (300) est un dispositif électronique configuré pour communiquer avec le terminal d'utilisateur (200) et le serveur (100) fournissant le programme d'application et pour recevoir et stocker le fichier de code de base.
